# EUROPEAN PATENT APPLICATION

(11) **EP 2 644 851 A1**
(43) Date of publication of application: **02.10.2013**
(21) Application number: 12162180.9
(22) Date of filing: 29.03.2012
(51) Int. Cl.: F01K 23/10, F02C 6/18, F02C 3/34, F02C 9/20, F23J 13/00, F23J 15/02, B01D 53/62, B01D 53/14

(54) **Method for operating a combined cycle power plant and combined cycle power plant for using such method**

(71) Applicant: Alstom Technology Ltd, 5400 Baden (CH)
(72) Inventor: Curran, Richard Joel, 8002 Zürich (CH); Sander, Frank, 5415 Rieden AG (CH); Carroni, Richard, 5443 Niederrohrdorf (CH); Benz, Eribert, 5413 Birmenstorf (CH)

(57) **Abstract**

The invention discloses a method for operating a combined cycle power plant (10) with an integrated CO2 capture unit (14), wherein flue gas of a gas turbine (11) is led along an flue gas path through a heat recovery steam generator (19), a flue gas cooling circuit (13) and a CO2 absorber (33).

A reduction in effort is achieved by operating the gas turbine (11) to have a backpressure (p1) at its exit, which compensates most or all of the pressure loss of the flue gas along the flue gas path.

## Description

### Background of the Invention

The present invention relates to the technology of combined cycle power plants with CO2 capture and storage capability. It refers to a method for operating a combined cycle power plant according to the preamble of claim 1. It further refers to a combined cycle power plant for using the method.

### Prior Art

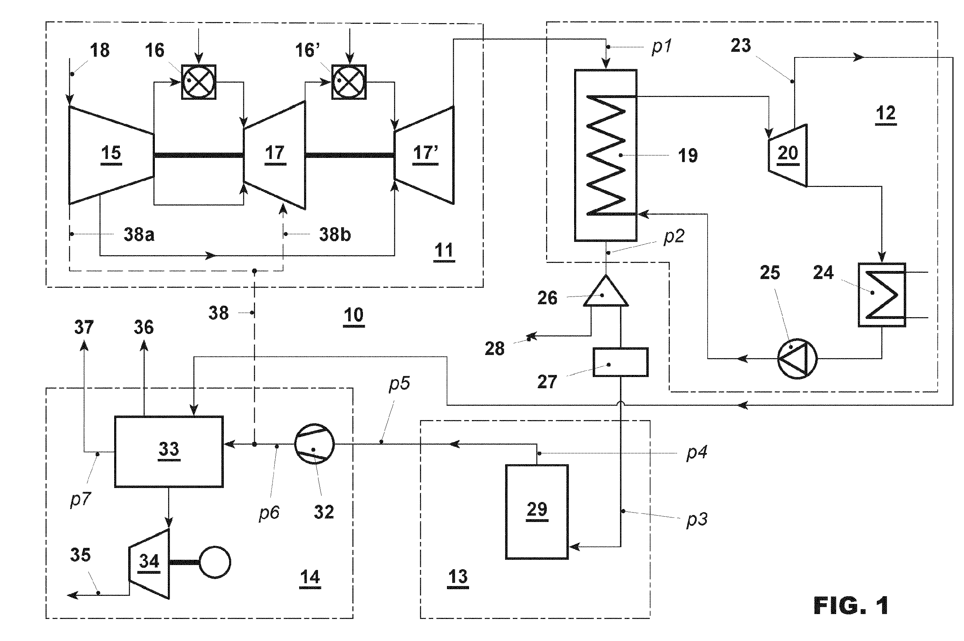

Fig. 1 shows a simplified diagram of a combined cycle power plant (CCPP) with an integrated carbon capture and storage (CCS) facility. The combined cycle power plant 10 of Fig. 1 comprises a gas turbine 11, the water/steam cycle 12, a flue gas cooling circuit 13 and a CO2 capture unit 14.

The gas turbine 11 is of the sequential combustion type and comprises a compressor 15, which compresses ambient air 18, a first combustor 16, a first turbine 17, a second combustor 16' and a second turbine 17'. The exhaust gas of the second turbine 17' passes a heat recovery steam generator 19, which is part of the water/steam cycle 12. The heat of the exhaust gas is used to generate steam within the heat recovery steam generator 19. The steam drives a set of steam turbines, which comprises a high-pressure steam turbine 20, and according to requirements an intermediate-pressure steam turbine and furthermore according to requirements a low-pressure steam turbine. The steam, which exits the last steam turbine, is condensed in the condenser 24, and the resulting water is pumped back to the heat recovery steam generator 19 by means of feedwater pump 25.

An intermediate extraction steam from the steam turbine 20 is introduced into the CO2 Absorber 33, as the line 23 shows.

After having passed the heat recovery steam generator 19, the exhaust gas is divided in a subsequent stack damper 26 into a first part, which enters a stack 28, and a second part, which passes a louvre damper 27 and enters the flue gas cooling circuit 13, where it is cooled down in a cooler 29. The cooler 29 as part of the cooling water circuit comprising according to requirements a heat exchanger and a pump.

After being cooled down, the exhaust gas is fed by means of a blower 32 into a CO2 absorber 33 within the CO2 capture unit 14. The captured CO2 leaves the CO2 absorber 33 to be compressed by means of a compressor 34. The compressed CO2 35 is then ready to be stored.

The CO2 absorber 33 is operated with steam extracted with pressure according to requirements at a steam extraction 23 from the steam turbine 20, or preferable between intermediate-pressure steam turbine and low-pressure steam turbine. Remaining gas from the absorber 33 is conducted to a stack 37, while condensate 36 is fed back into the water/steam cycle 12.

In case that a flue gas recirculation is provided, a flue gas recirculation path 38 leads from the CO2 capture unit 14 to the inlet of the gas turbine 11.

The typical pressures p1 to p7 at various points of the power plant 10 according to Fig. 1 are:

| | |
|---|---|
| p1 (gas turbine back-pressure) | 35mbar |
| p2 (HRSG exit) | 0mbar |
| p3 (after louvre damper 27) | -5mbar |
| p4 (at cooler exit) | -25mbar |
| p5 (at blower inlet) | -30mbar |
| p6 (at blower exit) | 65mbar |
| p7 (at absorber exit) | 0mbar. |

In a power plant configuration as shown in Fig. 1, the required power for the blower 32 can be of the order of several MW (e.g. 8.5MW). This has a large, negative impact on plant performance, when CO2 is captured. Furthermore, blower efficiency typically falls significantly when running off-design, meaning that part-load operation is penalized.

The capture rate of the CO2 capture unit 14 is also affected by deviation from the design point. As a concrete example, when a unit is designed for 90% CO2 capture at ISO conditions, the capture rate falls to 85% at the higher ambient temperatures encountered in summer. Guaranteeing 90% CO2 capture at all times of the year would entail over-designing the capture unit, leading to excessive costs and performance penalties.

An extreme off-design condition driving the overall system design is a gas turbine trip. Investigations have shown that the long run-out time of the blower 32 results in a strong vacuum in the upstream flue gas path (up to 100mbar below ambient), thereby causing structural damage.

Within a combined cycle power plant with carbon capture and storage flue gas must be transported from the exhaust of the HRSG 19 to the absorber 33 of the CO2 capture unit 14. Traditionally, the blower 32 is utilized to overcome all the pressure losses in the flue gas path, thereby enabling the gas turbine 11 to operate at design conditions (i.e. a standard gas turbine exit pressure of typically 35mbarg). The absorber pressure is essentially atmospheric. In this example, the blower head is approximately 100mbar.

Prior art regarding similar configurations recommends improving the CO2 capture efficiency by increasing the pressure in the absorber of the CO2 capture unit. Document EP 1 688 173 A2 1 proposes using a blower to achieve this goal. In detail, a carbon dioxide recovery system is disclosed comprising a turbine which is driven and rotated by steam, a boiler which generates the steam supplied to the turbine, a carbon dioxide absorption tower which absorbs and removes carbon dioxide from a combustion exhaust gas of the boiler by an absorption liquid, and a regeneration tower which heats and regenerates a loaded absorption liquid with carbon dioxide absorbed therein. The regeneration tower is provided with plural loaded absorption liquid heating means in multiple stages, which heat the loaded absorption liquid and remove carbon dioxide in the loaded absorption liquid. The turbine is provided with plural lines which extract plural kinds of steam with different pressures from the turbine and which supply the extracted plural kinds of steam to the plural loaded absorption liquid heating means as their heating sources. The plural lines are connected to make the pressure of supplied steam increased from a preceding stage of the plural loaded absorption liquid heating means to a post stage of the plural loaded absorption liquid heating means.

Further, on the combustion exhaust gas outlet side of the boiler, a blasting blower which pressurizes of a combustion exhaust gas, a cooler which cools the combustion exhaust gas, and a CO2 absorption tower which is filled with CO2 absorption liquid for absorbing and removing CO2 from the combustion exhaust gas are successively arranged in this sequence from the side of the boiler.

Document WO 2008/090168 A1 teaches the use of the gas turbine to increase the absorber pressure. In detail, it discloses a process for reducing CO2 emission in a power plant, wherein the power plant comprises at least one gas turbine coupled to a heat recovery steam generator unit and the CO2 capture unit comprises an absorber and a regenerator, the process comprising the steps of: (a) introducing hot exhaust gas exiting a gas turbine having a certain elevated pressure into a heat recovery steam generator unit to produce steam and a flue gas stream comprising carbon dioxide; (b) removing carbon dioxide from the flue gas stream comprising carbon dioxide by contacting the flue gas stream with absorbing liquid in an absorber having an elevated operating pressure to obtain absorbing liquid enriched in carbon dioxide and a purified flue gas stream, wherein the settings and/or construction of the gas turbine are adjusted such that the hot exhaust gas exiting the gas turbine has a pressure of at least 40% of the elevated operating pressure of the absorber. A blower for the exhaust gas is not used.

A special situation is given, when the combined CCPP uses flue gas recirculation (FGR) to increase CO2 concentration in the exhaust gas.

There is the proposal to enrich the CO2 concentration at the gas turbine exhaust by means of a flue gas recirculation (FGR) system, in combination with post-combustion CO2 capture (see for instance document WO 2006/018389 A1). Flue gas recirculation is beneficial for the CO2 capture process because both the concentration of carbon dioxide is increased and the overall mass flow to the CO2 capture unit is reduced. These two aspects result in a smaller CO2 capture and in a more efficient capture process.

In the proposed flue gas recirculation system the CO2 enriched flue gas is cooled and cleaned before being mixed with ambient air, and then supplied to the compressor inlet of the gas turbine.

There is further a proposal disclosed in DE 100 01 110 A1, to recover water from the flue gas exiting the HRSG. This is achieved via a droplet catcher, which is placed at the exit of a power turbine. The power turbine receives exhaust gas from the HRSG at a pressure of 2-5 bar. Unlike conventional gas turbines, this turbine is specifically designed to deliver this increased pressure (2-5 bar instead of the typical 1 bar) to the HRSG.

The prior art disclosed in the WO 2006/018389 A1 has various disadvantages:
● Blower auxiliary power consumption -> loss in performance of plant;
● Blower Control -> The control system of such a plant would carry more complexities, as the control of the blower would represent an additional functional block in the start up, shut down and normal operation of the flue gas path;
● Increase in flue gas temperature over blower -> loss in performance of plant;
● Maintenance of blower -> increased maintenance intervals, increased downtime;
● Following GT trip -> large underpressure of system caused by blower -> major hazard. Therefore the design of ducting and HRSG must be more robust (than if hazard was not present) thus increasing design and first cost.

The blower consumes power of approximately 2.6MW, costs a lot and has sizeable footprint of roughly 10m x 5m x 7m (L x W x H). Furthermore, the blower causes an increase in temperature of the flue gas flow by approx 3-4K. This increase causes a loss in performance of the plant. Finally, a trip of the GT whilst the blower is fully loaded could cause a severe underpressure in the flue gas path (approx. 70mbar). This represents a major hazard.

A reliable control system is necessary in order for the blower to follow gas turbine operation. Given the potentially extreme flow non-uniformities in the ducting upstream of the blower (including potential flow entrainment from a partially open stack (a measure applied to minimize the risk of under-pressure during extreme transients), it is also difficult to provide reliable measurements for the blower control system.

### Summary of the Invention

It is an object of the present invention to provide a method for operating a combined cycle power plant with flue gas treatment means, which substantially reduces the effort necessary in the flue gas treatment part of the power plant.

It is a further object of the invention to disclose a combined cycle power plant for using the method according to the invention.

These and other objects are obtained by a method according to claim 1 and a combined cycle power plant according to claim 10.

The invention relates to a method for operating a combined cycle power plant, wherein flue gas of a gas turbine is led along an flue gas path through a heat recovery steam generator to a flue gas treatment means, whereby the gas turbine is operated with a back-pressure at its exit, which compensates most or all of a pressure loss of the flue gas along the flue gas path.

According to an embodiment of the invention the gas turbine is operated to have a back-pressure at its exit, which compensates all of the pressure loss of the flue gas along the flue gas path.

Specifically, the gas turbine is operated with a back-pressure of 150mbar to approximately 250mbar.

According to another embodiment of the invention the gas turbine is operated to have a back-pressure at its exit, which compensates most of the pressure loss of the flue gas along the flue gas path, and that the remaining pressure loss is compensated by a blower being arranged in the flue gas path.

Specifically, the gas turbine is operated with a back-pressure of approximately 100mbar, and the blower) is operated with a duty of approximately 50mbar.

According to a further embodiment of the invention the flue gas treatment means comprises a flue gas cooling circuit and an integrated CO2 capture unit with a CO2 absorber.

According to just another embodiment of the invention flue gas treatment means comprises NOx reducing means.

Specifically, at least part the flue gas is recirculated to the inlet of the gas turbine on a flue gas recirculation path, and the pressure loss of the flue gas along the flue gas recirculation path is completely compensated by the back-pressure of the gas turbine.

According to another embodiment of the invention the back-pressure of the gas turbine is generated and controlled by means of a pressurized heat recovery steam generator.

The combined cycle power plant according to the invention comprises a gas turbine, a water/steam cycle with a heat recovery steam generator, through which the flue gas of the gas turbine flows along a flue gas path, whereby the gas turbine is designed to be operated with a back-pressure, which compensates most or all of the pressure loss of the flue gas along the flue gas path.

According to an embodiment of the invention a blower is arranged in said flue gas path, the duty of which is smaller than the back-pressure of the gas turbine.

According to another embodiment of the invention a pressurized heat recovery steam generator with a throttling damper in a HRSG stack is provided for generating said back-pressure.

According to a further embodiment of the invention a flue gas recirculation path is provided for recirculating flue gas back to the inlet of the gas turbine, and the gas turbine is designed to be operated with a back-pressure, which compensates the pressure loss of the flue gas along the flue gas recirculation path.

### Brief Description of the Drawings

The present invention is now to be explained more closely by means of different embodiments and with reference to the attached drawing.
- Fig. 1: shows a simplified diagram of a combined cycle power plant with integrated CO2 capture and storage capabilities, which can be used with the invention;
- Fig. 2: shows a further simplified diagram of a combined cycle power plant with integrated CO2 capture and storage capabilities, which can be used with the invention; and
- Fig. 3: shows a simplified diagram of a combined cycle power plant with a flue gas recirculation path and a pressurized HRSG according to an embodiment of the invention.

### Detailed Description of different Embodiments of the Invention

The present invention proposes to reduce the duty of the flue gas blower (from 100 to around 50mbar) and at the same time to increase the gas turbine back-pressure (p1 in Fig. 1, from 40 to approximately 100mbar), compared to the state of the art configuration shown in Fig. 1. Such a configuration permits an increase in overall net performance (because the gas turbine compressor 15 is more efficient than the blower 32) and reduces cost.

Furthermore, such a kind of operation permits additional, desirable features:
● Slightly increasing the absorber pressure (above the standard atmospheric pressure) when the capture unit runs off-design (e.g. on hot days), so as to maintain the design CO2 capture rate without having to overdesign the unit. This can be achieved by a blower equipped with efficient mass flow control, e.g. inlet guide vanes (where efficiency varies slightly over the load range 80-100%) or variable pitch blades (high efficiency over much larger load range), adjusting the guide vanes (or blade pitch) permits maximum load when the higher absorber pressure is requested.
● Purging functions.
● Standard gas turbines can be used (no large modifications needed for 100mbar back-pressure).
● The vacuum normally created (in the flue gas path) due to a gas turbine trip, is much smaller.

### First embodiment:

According to a first embodiment of the invention it is proposed to completely eliminate the flue gas blower 32 and to operate the gas turbine 11 at a higher back-pressure (e.g. 150mbar would be suitable in the CCPP/CCS plant of Fig. 1) in order to transport the exhaust gas to the CO2 capture unit 14. The absorber pressure remains approximately constant at a given gas turbine operating point. This embodiment is ideal for system simplification and cost reduction.

Thermodynamic calculations, heat balances and cost assessments for the above-described plant of Fig. 1 conclude that implementing the invention results in the following benefits:
● Overall plant output is 3.2MW higher.
● Hardware costs are reduced substantially.
● Removing the blower leads to a more robust and more easily controllable system.
● The problem of vacuum creation during a gas turbine trip is completely avoided.

### Second embodiment:

The inventive concept can also be used in a CCPP/CCS employing flue gas recirculation. In this case, the gas turbine back-pressure is increased by approximately 30mbar (corresponding to the pressure loss along the flue gas recirculation path 38) A small blower 32 is used for the CCS stream, to overcome the pressure losses induced by the CO2 capture unit 14. The recirculation path 38 leads from the CO2 capture unit 14, downstream of the pump 32 and upstream of the CO2 absorber, to the inlet of the gas turbine 11,by way of at least one subordinated path 38a, 38b.

In the case of a CCPP with flue gas recirculation the flue gas path is generally optimized by removing the blower. This optimization can be applied to flue gas recirculation in the combination with carbon capture and sequestration (CCS) and flue gas recirculation for the purpose of NOx reduction.

The solution involves the provision of a pressurized HRSG in a combined cycle with a gas turbine with a flue gas recirculation system for the purposes of CCS and NOx reduction.

The solution involves designing the HRSG such that the velocity levels are higher than in a "standard" HRSG. To do so the HRSG design is smaller than the "standard" giving a higher pressure drop (dp) and a higher exit pressure. The higher exit pressure can be used to overcome the pressure losses experienced over the flue gas path without the need for an additional pressure recovery device, i.e. blower.

### (A) FG R with CCS:

As has been told already, the pressure losses incurred over the flue gas path shown in WO 2006/018389 A1 must be recovered by means of a blower.

According to the present invention a pressurized HRSG is provided such that the exit pressure is sufficient to overcome the aforementioned pressure loss. By doing so the HRSG will be significantly smaller, and hence will have lower first cost and smaller footprint.

A smaller HRSG results in a larger backpressure on the turbine. This increase in backpressure on the turbine, which would be equivalent to the pressure drop across the flue gas path (i.e.: from exit of gas turbine to inlet of gas turbine).

This assumes the following:

| | |
|---|---|
| dp over HRSG: | 35 mbar |
| dp over a DCC: | 25 mbar |
| dp over a mixer: | 5 mbar |
| dp over ducting: | 5mbar |

The net increase of backpressure on the turbine is equal to sum of the dp of the DCC, mixer and ducting, i.e. 35 mbar.

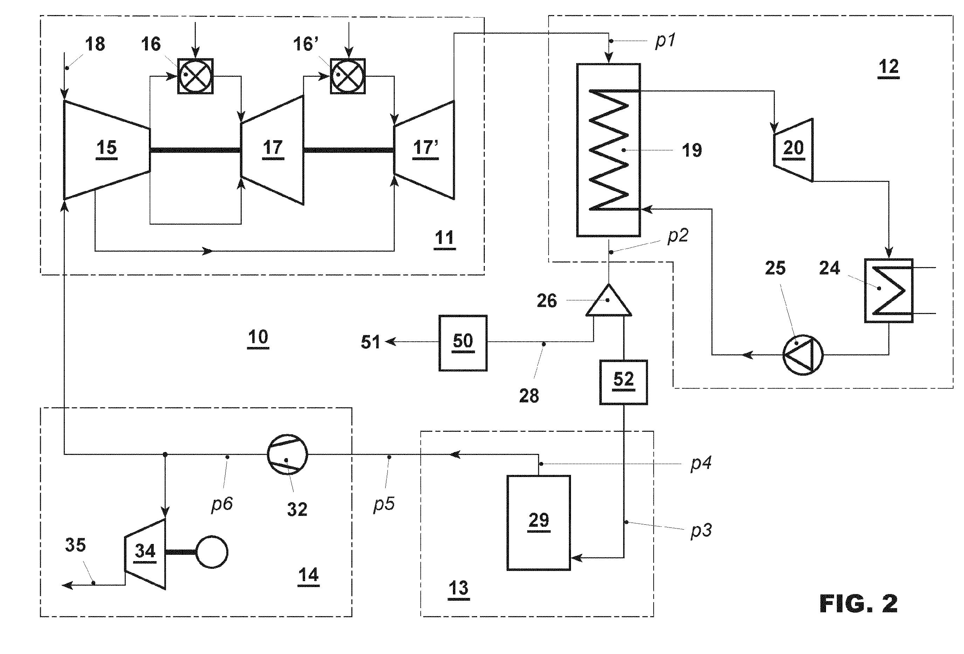

Fig. 2 shows various modifications of Fig. 1, namely relating to the operating cycle path 38 leads from the CO2 capture unit 14 to the inlet of the gas turbine 11. After having passed the heat recovery steam generator 19, the exhaust gas is divided in a subsequent stack damper 26 into a first part, which enters a stack 28 to a louver damper 50 and forwards as exhaust gas 51. A second part, which passes a louvre damper 52 and enters the flue gas cooling circuit 13, where it is cooled down in a cooler 29. The cooler 29 as part of the cooling water circuit comprising according to requirements a heat exchanger and a pump. After having passed the gas cooling circuit 13 the exhaust gas is compressed by means of a pump 32a and subsequently introduced to a gas turbine 11. Downstream of the pump 32 and upstream of the turbine 11 a part of the exhaust gas to be compressed by means of a compressor 34. The compressed exhaust gas 35 is then ready to be stored.

An intermediate extraction steam from the steam turbine 20 is not provided.

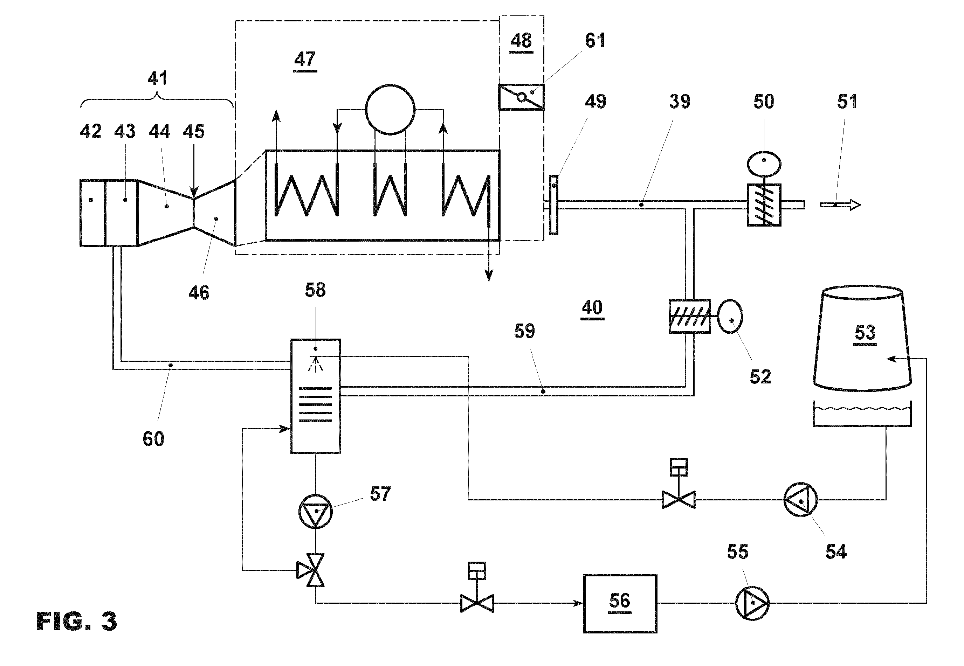

A schematic of a respective plant layout can be seen in Fig. 3. The combined cycle power plant 40, as a punctuated version of previous systems, shown in Fig. 3, comprises a gas turbine 41 with an air inlet 42, a mixer 43, a compressor 44 and a turbine 46, which is driven by hot gases generated by the combustion of a fuel 45. The exhaust gas of the gas turbine 41 passes a heat recovery steam generator 41, which is part of a water/steam cycle, not shown.

At the exit of the HRSG, the exhaust gas can be emitted through a HRSG stack 48 with an integrated throttling damper 61 and/or flow through a flue gas line 39, which can be shut off by means of a shutter 49. The exhaust gas 51 flowing through the flue gas line 39 can pass a first louvre damper 50 to reach a CCS facility (not shown) and/or a second louvre damper 52 to be recirculated to the mixer 43 of the gas turbine 41 via flue gas recirculation lines 59 and 60.

Between flue gas recirculation lines 59 and 60 a direct contact cooler (DDC) 58 is provided having a separate cooling water cycle comprising pumps 54, 55 and 57, a cooling tower 53 and a water treatment device 56.

The operation of the system of Fig. 3 can be as follows:

### (a) CCS offline, FGR ratio = 0%:

Shutter 49 is closed, HRSG stack 48 is open, louvre damper 50 (CCS) is closed, louvre damper 52 (FGR path) is closed.

### (b) CCS online, FGR ratio = 0%:

Shutter 49 is open, HRSG stack 48 (throttling damper 61) controls the required pressure level, louvre damper 50 is open, louvre damper 52 is closed.

### (c) CCS offline, FGR ratio = 30% (for example):

Shutter 49 is open, HRSG stack (throttling damper 61) controls the required pressure level, louvre damper 50 is closed, louvre damper 52 is open.

### (d) CCS online, FGR ratio = 30% (for example):

Shutter 49 is open, HRSG stack 48 (throttling damper 61) controls the required pressure level, louvre damper 50 is open, louvre damper 52 is closed.

A comparison of the plant performance with and without blower gives:

### Blower consumption:

The power consumed by a blower required to overcome the pressure loss of the system in Fig. 3 was estimated based on the following parameter:
● Maximum mass flow passing through the FGR path blower: 345 kg/s;
● Pressure increase required: 35 mbar;
● Corresponding blower power consumption: 2.6 MW.

### Impact of increased backpressure on plant performance:

The increased of back-pressure of 35mbar on the turbine results in a CC loss in gross power of approximately 2MW.

### (B) FGR for NOx reduction:

As in part (A) above, a pressurized HRSG may be used such that the exit pressure is sufficient to overcome the pressure loss in the flue gas path. Similarly the increase in backpressure on the turbine will be equivalent to the dp over the flue gas path components (DCC, ducting and mixer 43), i.e. 35mbar.

The deviation from the proposal in part (A) concerns the splitting of the exhaust gas after the HRSG 41. In this case 30-40% of exhaust from the HRSG 41 shall be recirculated to the gas turbine 41. The remaining 60-70% shall be released to an exhaust stack via the louvre damper 50. In order to maintain the increased pressure within the flue gas path the louvre damper 50 must be throttled.

Thus, the proposed solution with respect to Fig. 3 has the following characteristics:
● A control of the pressure drop across a flue gas recirculation path is realized through the application of a pressurized HRSG in combination with a throttling damper.
● The FGR is used for the purpose of NOx reduction and for carbon capture technologies.
● A throttling damper (61) in the exhaust stack (48) is used to control the pressure level in the flue gas path.
● The HRSG is pressurized with a delta pressure dp >60mbar.

### List of Reference Numerals

- 10,40: Combined cycle power plant (CCPP)
- 11: Gas turbine (with sequential combustion)
- 12: Water/steam cycle
- 13: Flue gas cooling circuit
- 14: CO2 capture unit
- 15,44: Compressor
- 16,16': Combustor
- 17,17',46: Turbine
- 18: Ambient air
- 19,47: Heat recovery steam generator (HRSG)
- 20: Steam turbine
- 23: Steam extraction
- 24: Condenser
- 25: Feedwater pump
- 26: Stack damper
- 27: Louvre damper
- 28,37: Stack
- 29: Cooler
- 32: Blower
- 33: CO2 absorber
- 34: Compressor
- 35: CO2
- 36: Condensate
- 38, 38a, 38b: Flue gas recirculation path
- 39: Flue gas line
- 41: Gas turbine
- 42: Air inlet
- 43: Mixer
- 45: Fuel
- 48: HRSG stack
- 49: Shutter
- 50,52: Louvre damper
- 51: Exhaust gas
- 53: Cooling tower
- 54,55,57: Pump
- 56: Water treatment device
- 58: Direct contact cooler (DCC)
- 59,60: Flue gas recirculation line
- 61: Throttling damper

## Claims

1. Method for operating a combined cycle power plant (10, 40), wherein flue gas of a gas turbine (11, 41) is led along a flue gas path through a heat recovery steam generator (19, 47) to a flue gas treatment means (13, 33; 58, 59, 60), **characterized in that** the gas turbine (11, 41) is operated with a back-pressure (p1) at its exit, which compensates most or all of a pressure loss of the flue gas along the flue gas path.

2. Method according to claim 1, **characterized in that** the gas turbine (11, 41) is operated to have a back-pressure (p1) at its exit, which compensates all of the pressure loss of the flue gas along the flue gas path.

3. Method according to claim 2, **characterized in that** the gas turbine (11) is operated with a back-pressure (p1) of 150 mbar to approximately 250mbar.

4. Method according to claim 1, **characterized in that** the gas turbine (11) is operated to have a back-pressure (p1) at its exit, which compensates most of the pressure loss of the flue gas along the flue gas path, and that the remaining pressure loss is compensated by a blower (32) being arranged in the flue gas path.

5. Method according to claim 4, **characterized in that** the gas turbine (11) is operated with a back-pressure (p1) of approximately 100mbar, and the blower (32) is operated with a duty (p6-p5) of approximately 50mbar.

6. Method according to one of the claims 1-5, **characterized in that** the flue gas treatment means comprises a flue gas cooling circuit (13) and an integrated CO2 capture unit (14) with a CO2 absorber (33).

7. Method according to one of the claims 1-5, **characterized in that** flue gas treatment means comprises NOx reducing means.

8. Method according claim 6 or 7, **characterized in that** at least part the flue gas is recirculated to the inlet of the gas turbine (11, 41) on a flue gas recirculation path (38; 39, 59, 60), and that the pressure loss of the flue gas along the flue gas recirculation path (38; 39, 59, 60) is completely compensated by the back-pressure (p1) of the gas turbine (11, 41).

9. Method according to one of the claims 1 to 8, **characterized in that** the back-pressure of the gas turbine (11, 41) is generated and controlled by means of a pressurized heat recovery steam generator (19, 47, 61).

10. Combined cycle power plant (10) for using the method according to one of the claims 1-9, comprising a gas turbine (11, 41), a water/steam cycle (12) with the heat recovery steam generator (19, 47), through which the flue gas of the gas turbine (11, 41) flows along a flue gas path, **characterized in that** the gas turbine (11, 41) is designed to be operated with a back-pressure (p1), which compensates most or all of the pressure loss of the flue gas along the flue gas path.

11. Combined cycle power plant according to claim 10, **characterized in that** a blower (32) is arranged in said flue gas path, the duty (p6-p5) of which is smaller than the back-pressure (p1) of the gas turbine (11).

12. Combined cycle power plant according to claim10, **characterized in that** a pressurized heat recovery steam generator (19, 41) with a throttling damper (61) in a HRSG stack (48) is provided for generating said back-pressure.

13. Combined cycle power plant according to one of the claims 10 to 12, **characterized in that** a flue gas recirculation path (38; 39, 59, 60) is provided for recirculating flue gas back to the inlet of the gas turbine (11, 41), and that the gas turbine (11, 41) is designed to be operated with a back-pressure (p1), which compensates the pressure loss of the flue gas along the flue gas recirculation path (38; 39, 59, 60).
